# EUROPEAN PATENT APPLICATION

(11) **EP 1 365 403 A2**
(43) Date of publication of application: **26.11.2003**
(21) Application number: 03252911.7
(22) Date of filing: 09.05.2003
(51) Int. Cl.: G11B 20/12, G11B 20/18

(54) **Optical disc and method for recording data on and/or reproducing data from the same**

(30) Priority: 20.05.2002 KR 2002027949
(71) Applicant: SAMSUNG ELECTRONICS CO., LTD., Suwon-City, Kyungki-do (KR)
(72) Inventor: Lee, Kyung-geun, Bundang-gu, Seongnam-si, Gyeonggi-do (KR); Park, In-sik, 2-dong, Paldal-gu, Suwon-si, Gyeonggi-do (KR)
(74) Representative: Robinson, Ian Michael

(57) **Abstract**

An optical disc on which data is recorded and/or from which data is reproduced comprises a recording area where data is recorded in at least one physical cluster (15), a defective area (16) where a defect that prevents recording and/or reproduction of data is present in the recording area, and a recording end area (14) where information indicating an end of recording is recorded before the defective area (16). A method for recording data on and/or reproducing data from a high density optical disc having a defective area (16) is performed by recording data in a predetermined recording area including the defective area (16), and recording data indicating an end of recording before the defective area (16).

## Description

The present invention relates to a high density optical disc and a method for recording data on and/or reproducing data from the high density optical disc.

In general, optical discs are widely used as information recording media for an optical pickup apparatus for recording and/or reproducing information in a non-contact manner and are classified as compact discs (CDs), digital versatile discs (DVDs), etc., according to information recording capacity. There are 650 MB CD-Rs, CD-RWs, 4.7 GB DVD+RWs, etc. as optical discs capable of being recorded on, erased, and reproduced from. Furthermore, an HD-DVD having a 23 GB recording capacity has been developed.

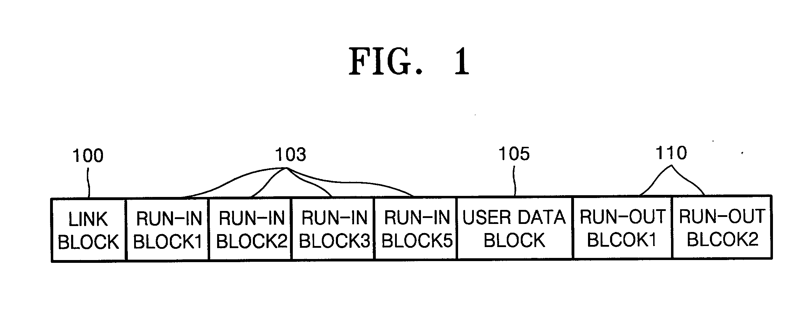

Here, in the case of a CD-RW capable of repetitive recording, a basic recording unit in which a predetermined amount of data can be recorded is referred to as a packet and the structure of the packet is shown in Figure 1. A plurality of run-in blocks 103 and run-out blocks 105 are arranged before and after a user data block 105 where user data is recorded. Also, a link block 100 is provided at the leading portion of the basic recording unit to enable continuous recording. However, when the user data block 105 includes a defective area where recording is not possible, since data cannot be recorded in the defective area, recording must be terminated before the defective area. However, when the defective area is found, there is no definition made with respect to a recording and/or reproduction method or the structure of an optical disc. Thus, it is likely that the defective area is processed differently according to the manufacturer of the disc or the recording and/or reproduction apparatus. Accordingly, a problem with the compatibility of a disc drive may occur.

Korean Patent Publication No. 2000-75374 filed by the present applicant discloses a defective area processing method and a recording medium in which a linking scheme of a predetermined rule is applied just behind a defective area with respect to a DVD-RW.

However, in the case of a high density optical disc having a capacity of 20 GB or more, to be introduced in the near future, when a defective area is found, there is no definition of a method and the structure of a disc to process the defective area at all. Thus, the above-described problem of the compatibility of a disc drive arises and, accordingly, recording and/or reproduction becomes unstable with respect to the disc. Therefore, for the case in which a defective area is found in the high density optical disc, a definition of a recording and/or reproduction method and the structure of a disc corresponding thereto is needed.

An aim of the present invention is to provide a high density optical disk which avoids or at least reduces the above described problem of compatibility when defective areas occur. Another aim of the present invention is to provide a method for recording data on and/or reproducing data from the high density optical disk, where the method increases compatibility of the disk even when defective areas occur on the disk.

According to the present invention there is provided an apparatus and method as set forth in the appended claims. Preferred features of the invention will be apparent from the dependent claims, and the description which follows.

The present invention provides an optical disc in which, when a defective area is found during verification of the disc or recording and/or reproduction of data, recording end data indicating that recording is terminated is recorded just ahead of the defective area, and a method for recording data on and/or reproducing data from the optical disc. Thus, since the compatibility of a disc drive is ensured, recording and/or reproduction performance of a high density optical disc is improved.

Also, the present invention provides an optical disc and a method for recording data on and/or reproducing data from the optical disc in which recording and/or reproduction are performed smoothly and continuously by performing linking subsequent to the defective area.

According to one aspect of the present invention there is provided an optical disc on which data is recorded and/or from which data is reproduced, comprising a recording area where data is recorded in at least one physical cluster, a defective area where a defect that prevents recording and/or reproduction of data is present in the recording area, and a recording end area where information indicating an end of recording is recorded before the defective area.

The defective area is found during verification of the disc before data is recorded or during recording and/or reproduction of data.

A run-in and a run-out are provided before and after a physical cluster, respectively, so that data can be accurately recorded in the physical cluster.

A guard 3 where data indicating an end of recording is recorded is provided at an end portion of a basic recording unit where a predetermined amount of data is recorded.

The guard 3 has a length of at least 300 channel bits and is formed of a continuous pattern including at least 3T and 5T.

Recording is performed with respect to the defective area by lowering recording power of a light source to a power that does not incur recording.

The recoding power of the light source is maintained as a reproduction power with respect to the defective area.

The recording area comprises a recorded area in which data is already recorded and a blank area in which data is not recorded.

According to another aspect of the present invention there is provided an optical disc on which data is recorded and/or from which data is reproduced, comprising a recording area where data is recorded in at least one physical cluster, a defective area where a defect that prevents recording and/or reproduction of data is present in the recording area, and a recording end area where information indicating an end of recording is recorded before the defective area, wherein a linkage is set to occur subsequent to the defective area.

An additional guard 1 and guard 2 to protect user data are provided in the run-in and run-out, respectively. The guard 2 has the same length and pattern as a guard 3 indicating that recording ends.

According to yet another aspect of the present invention there is provided a method for recording data on and/or reproducing data from a high density optical disc having a defective area, the method comprising recording data in a predetermined recording area including the defective area, and recording data indicating an end of recording before the defective area.

The method further comprises processing a linkage to occur subsequent to the defective area.

The data is recorded in units of physical clusters.

According to still yet another aspect of the present invention there is provided a method for recording data on and/reproducing data from a high density optical disc having a defective area, the method comprising recording data in a predetermined recording area including the defective area, and processing a linkage to occur subsequent to the defective area.

For a better understanding of the invention, and to show how embodiments of the same may be carried into effect, reference will now be made, by way of example, to the accompanying diagrammatic drawings in which:
Figure 1 is a view showing the structure of a basic recording unit applied to a conventional CD-RW;
Figure 2A is a view showing a structure where data is recorded in a single physical cluster;
Figure 2B is a view showing a recording structure where data is continuously recorded in a plurality of physical clusters;
Figure 3A is a view showing a case in which a defective area is detected when data is continuously recorded in a plurality of physical clusters in an optical disc according to a preferred embodiment of the present invention;
Figure 3B is a view showing an optical disc having a defective area, for explaining a method for recording and/or reproducing data by processing the defective area of the optical disc according to a preferred embodiment of the present invention;
Figure 3C is a view showing the power of a light source when recording and/or reproduction are performed with respect to the optical disc;
FIGS. 4A and 4B are views showing the structure of run-in and run-out of the optical disc;
Figure 5 is a view for explaining that a linkage is generated subsequent to a defective area according to the method for recording data on and/or reproducing data from an optical disc; and
FIGS. 6A and 6B are views for explaining an optical disc having a defective area according to another preferred embodiment of the present invention and a method for recording and/or reproduction by processing the defective area of the optical disc.

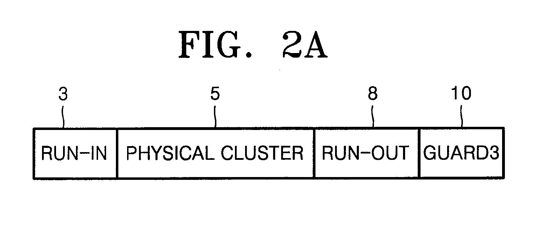

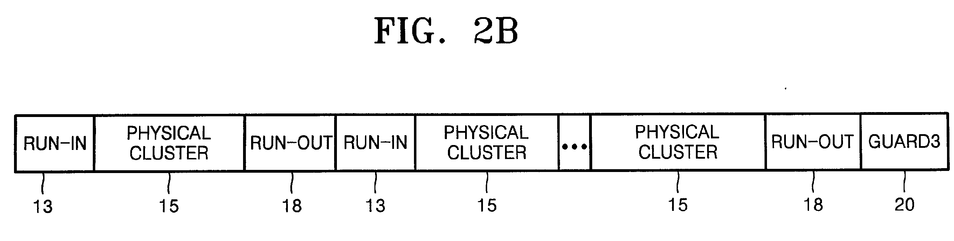

Figure 2A shows a case in which data is recorded in a single physical cluster 5 in a high density optical disc capable of recording and/or reproducing data. Figure 2B shows a case in which data is continuously recorded in a plurality of physical clusters 15. Run-ins 3 and 13 and run-outs 8 and 18 are disposed before and after the physical clusters 5 and 15, respectively. The run-ins 3 and 13 and the run-outs 8 and 18 are for accurately recording data in the physical clusters 5 and 15 during recording and/or reproducing data. That is, when data is recorded in the run-ins 3 and 13 or the run-outs 8 and 18, which is not the correct position for the data to be recorded, error correction is processed so that data can be smoothly recorded and/or reproduced.

Also, guard 3, 10, and 20 where information indicating an end of recording is stored are provided at in a portion where recording ends. The data recording and/or reproduction of a basic recording unit where a predetermined amount of data is recorded is completed by the guard 3. Here, although a physical cluster is explained as a minimum recording unit where user data is recorded, a sector, an ECC block, or a frame may be a minimum recording unit.

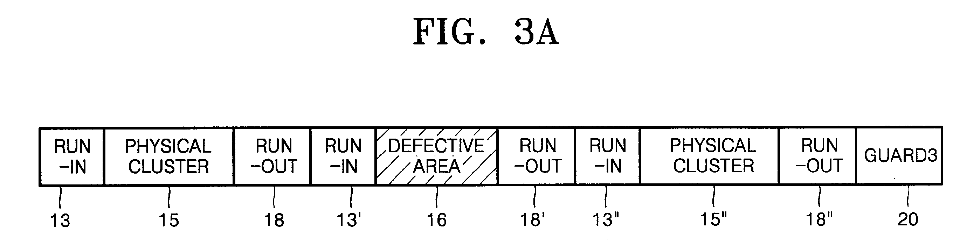

Referring to Figure 3A, in an optical disc according to a preferred embodiment of the present invention, when recording and/or reproduction is continuously performed with respect to a basic recording unit having a predetermined capacity where user data is recorded, if a defective area 16 where data cannot be recorded and/or reproduced is found, an address corresponding to the defective area 16 is stored in a defect list area. The defective area 16 can also be found during verification of a disc before data is recorded, in addition to during the recording and/or reproduction of data. When the defective area 16 is found during the verification of a disc, meaningless data that cannot be reproduced is recorded and the defective area is detected by this recording.

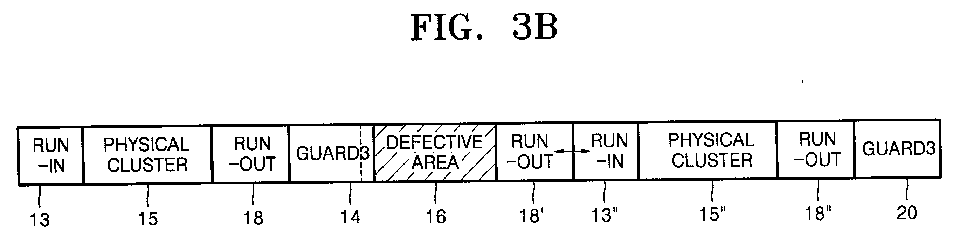

Next, as shown in Figure 3B, when recording is performed with respect to a predetermined recording area including the defective area 16, since recording cannot be performed in the defective area 16, a recording end area 14 where data indicating that recording is terminated is provided just before the defective area 16. The recording end area 14 can be configured identically to the guard 3 (20). That is, the recording end area 14 can be configured to have the same length and pattern as the guard 3 (20). For example, when the guard 3 (20) has a length of at least 300 channel bits and a continuous pattern including at least 3T and 5T, the recording end area 14 is preferably configured to have the same length and pattern as the guard 3 (20). Here, 3T and 5T are units of a length of a mark recorded on a disc.

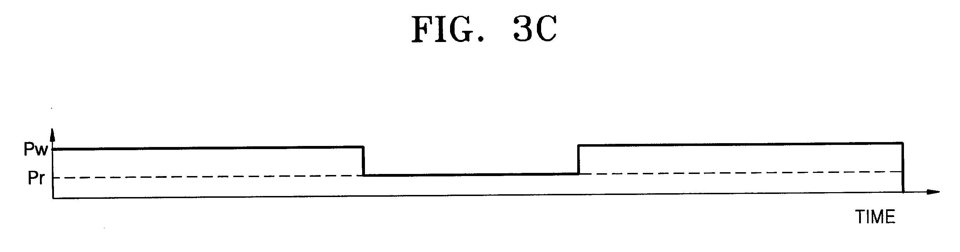

When data is recorded on an optical disc having the above structure, as shown in Figure 3C, recording is performed by maintaining the power of a light source (not shown) as a recording power Pw. Starting from the rear portion of the recording end area 14, before the defective area 16 begins, the power of the light source is controlled to be lower than the recording power Pw so that recording cannot be performed. Preferably, the power of the light source can be reduced to a reproduction power Pr. Here, the power of the light source is preferably lowered before the recording end area 14 ends. As shown in Figure 3B, the power is controlled to be the reproduction power Pr from a position indicated by a dotted line in the recording end area 14.

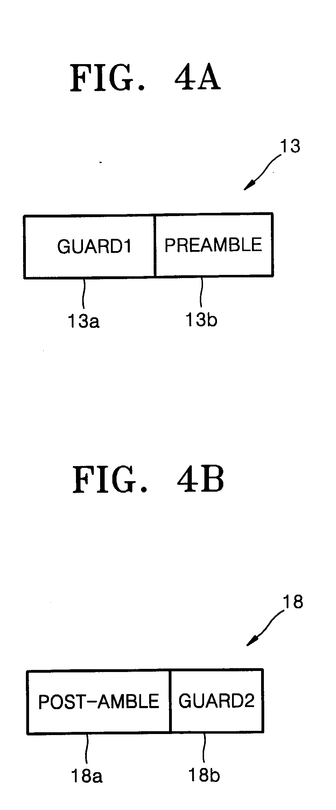

In the meantime, as shown in Figure 4A, the run-in 13 may include a guard 1 (13a) having a predetermined pattern to overcome overwriting due to mismatch or change of a data recording start point, and a preamble 13b to perform signal processing such as locking or synchronizing. Also, as shown in Figure 4B, the run-out 18 may include a post-amble 18a to perform signal processing and a guard 2 (18b) having a predetermined pattern to remove overwriting due to a change of the data recording start point. As a result, the guard 1 (13a) and guard 2 (18b) serve as a buffer to protect user data. Here, the guard 2 (18b) and guard 3 (20) can be configured to have the same lengths and patterns. For example, the guard 2 (18b) and guard 3 (20) may have lengths of at least 300 channel bits and may be formed by continuous patterns including at least 3T and 5T.

Next, a linkage is generated subsequent to the defective area 16 so that recording may resume from a physical cluster subsequent to the defective area 16. Thus, the power of the light source is raised back to the recording power Pw from the rear portion of a run-out 18' subsequent to the defective area 16 and data recording begins again. Referring back to Figure 3B, an arrow between the run-out 18' and the run-in 13" after the defective area 16 indicates that a linkage is generated.

A method for recording data on and/or reproducing data from an optical disc according to a preferred embodiment of the present invention will now be described below.

Referring to Figures 3A through 3C, when the defective area 16 where no data can be recorded is found during verification of a disc or during recording of data on or reproduction of data from the disc, data indicating that recording ends is recorded in an run-in area 13' disposed before the defective area 16. Thus, recording is not performed in the defective area 16 due to the recording end data. Here, the power of the light source in the defective area 16 is controlled to be lower than the recording power Pw, preferably, the reproduction power Pr, so as not to record data.

Next, a linkage is generated so that data can be recorded in the area subsequent to the defective area 16. That is, the run-out 18' and the run-in-13" subsequent to the defective area 16 are linked.

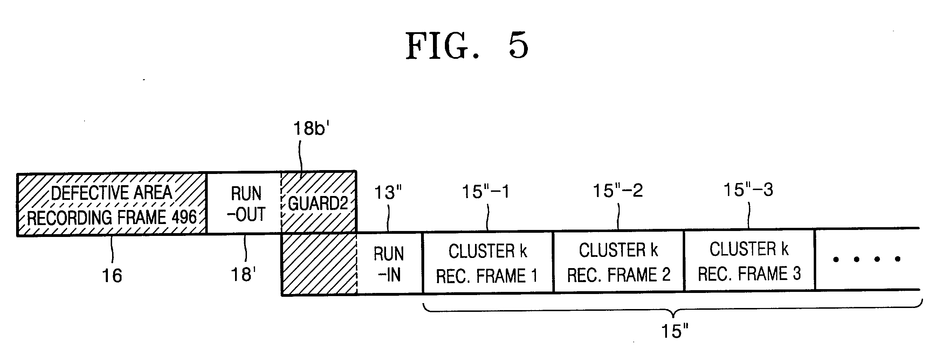

Figure 5 shows that the run-out 18' and the run-in-13" subsequent to the defective area 16 are linked. When recording resumes after the defective area 16, data can be recorded overlapping a part of the run-out 18' and a part of the run-in 13" subsequent thereto, not in a desired position for recording. In this case, the linking is performed by correcting an error corresponding to a portion where recording overlaps. Here, the error correction is made in preparation for a case in which recording does not resume at an accurate recording start point when recording ends before the defective area 16 and resumes after the defective area 16.

In the meantime, when the guard 2 (18b') and the guard 3 (20) present in the run-out 18' have the same configuration, that is, the same length and pattern, it is advantageous to use the same linking scheme suggested for the guard 3 (20) as it is. As a result, recording and/or reproduction are smoothly performed after the defective area 16. Recording and/or reproduction are continuously performed up to a physical cluster 15" subsequent to the run-in 13". When another defective area is found during recording and/or reproduction, a recording end area is defined just before the defective area in the same manner as described above and a linkage is generated so that recording can resume in the area subsequent to the defective area. The physical cluster 15" is formed of, for example, 496 recording frames (Rec.Frame) (15"-1, 15"-2, ...). In Figure 5, these recording frames are illustrated after the run-in 13". Here, cluster k denotes the k^{th} physical cluster.

Next, recording is performed as the power of the light source is maintained at the recording power Pw in the run-in 13" subsequent to the defective area 16. The guard 3 (20) indicating the end of recording is recorded at the end of a basic recording unit where a predetermined amount of data can be recorded. Here, the recording end data, that is, the guard 2, recorded before the defective area 16, is configured to be the same as the guard 3 (20). For example, the guard 3 (14 and 20) preferably have a length of at least 300 channel bits and are configured as a continuous pattern including at least 3T and 5T.

An optical disc and a method for recording data on and/or reproducing data from the optical disc according to another preferred embodiment of the present invention will now be described below.

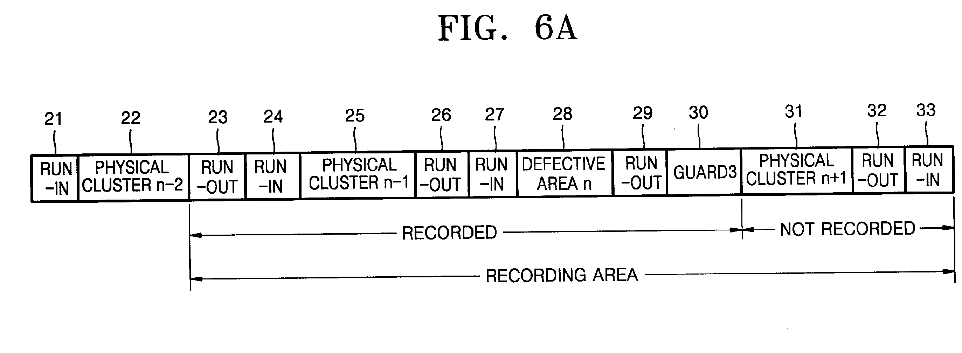

Figure 6A shows a state prior to recording is performed according to a method for recording data on and/or reproducing data from an optical disc according to another preferred embodiment of the present invention. Here, recording has been performed from an (n-2)^{th} physical cluster 22 to an n^{th} block 28 and a blank area in which no data is recorded is present starting from an (n+1)^{th} block 31. The (n-2)^{th} through (n+1)^{th} blocks 22, 25, 28, and 31 have run-ins 21, 24, and 27 and run-outs 23, 26, 29, and 32, respectively, and a defective area is found in the n^{th} block 28. Since recording is terminated in the n^{th} block 28, a guard 3 (30) indicating the end of recording is recorded in a run-in area disposed after the n^{th} block 28. Here, recording is performed from the (n-2)^{th} block 22 to the (n+1)^{th} block 31, part of a recording area is already recorded on and the remaining part is not recorded on. In this case, the method for recording and/or reproducing data with respect to an optical disc according to the present invention can be applied.

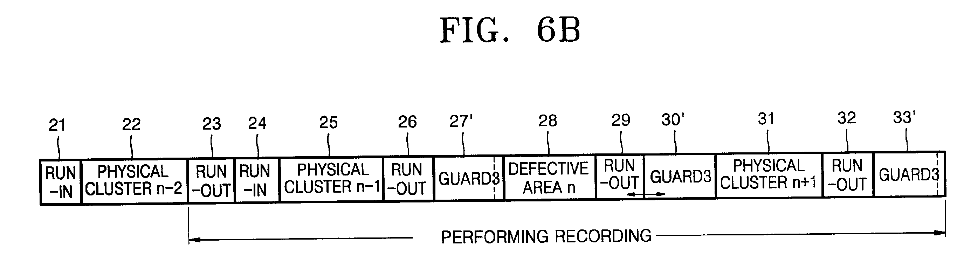

Figure 6B shows a state in which recording has been performed according to a method for recording data on and/or reproducing data from an optical disc according to another preferred embodiment of the present invention.

Recording begins from the (n-2)^{th} block 22 and ends before the n^{th} block 28, which is a defective area. Thus, a guard 3 (37') indicating the end of recording is recorded before the defective area 28. The run-out 29 and the run-in 30' subsequent to the defective area 28 are linked. A guard 3 (33') indicating the end of recording is recorded in the run-in subsequent to the (n+1)^{th} block 31 where the recording ends.

When recording is performed in an area including a defective area found during continuous data recording and/or reproduction with respect to a high density optical disc or during verification of a blank disc, data indicating the end of recording is recorded just before the defective area and a linkage is defined to occur subsequent to the defective area. Thus, more stable and reliable data recording and/or reproduction is possible.

In the optical disc and the method for recording data on and/or reproducing data from the optical disc according to the present invention, when a defective area is present, since data indicating the end of recording is recorded such that recording ends before the defective area, recording is not performed in the defective area. Furthermore, since a linkage is processed to occur in an area subsequent to the defective area, data is stably recorded and/or reproduced. In the high density optical disc where data is continuously recorded and/or reproduced, by proposing a standard to process the defective area, the compatibility of a disc drive is ensured and, accordingly, reliability in recording and/or reproduction with respect to the high density optical disc is improved.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical disc on which data is recorded and/or from which data is reproduced, comprising:
a recording area where data is recorded in at least one physical cluster (15);
a defective area (16) where a defect that prevents recording and/or reproduction of data is present in the recording area; and
a recording end area (14) where information indicating an end of recording is recorded before the defective area (16).

2. The optical disc as claimed in claim 1, wherein the defective area (16) is found during verification of the disc before data is recorded or during recording and/or reproduction of data.

3. The optical disc as claimed in claim 1 or 2, wherein a run-in (13) and a run-out (18) are provided before and after a physical cluster (15), respectively, so that data can be accurately recorded in the physical cluster (15).

4. The optical disc as claimed in any preceding claim, wherein a guard 3 (14) where data indicating an end of recording is recorded is provided at an end portion of a basic recording unit (15) where a predetermined amount of data is recorded.

5. The optical disc as claimed in claim 4, wherein the recording end area (14) is configured to be the same as the guard 3 (14).

6. The optical disc as claimed in claim 5, wherein the guard 3 (14) has a length of at least 300 channel bits and is formed of a continuous pattern including at least 3T and 5T.

7. The optical disc as claimed in any preceding, claim, wherein recording is performed with respect to the defective area (16) by lowering recording power of a light source to a power that does not incur recording.

8. The optical disc as claimed in claim 7, wherein the recording power of the light source is maintained as a reproduction power with respect to the defective area (16).

9. The optical disc as claimed in any preceding claim, wherein the recording area comprises a recorded area in which data is already recorded and a blank area in which data is not recorded.

10. The optical disk of any preceding claim, wherein a linkage is set to occur subsequent to the defective area (16).

11. The optical disc as claimed in claim 3 or any claim dependent thereon, wherein an additional guard 1 (13a) and guard 2 (18b) to protect user data are provided in the run-in (13) and run-out (18), respectively.

12. The optical disc as claimed in claim 11, wherein the guard 2 (18b) has the same length and pattern as a guard 3 (14) indicating that recording ends.

13. The optical disc as claimed in claim 12, wherein the guard 2 (18b) has a length of at least 300 channel bits and is formed of a continuous pattern including at least 3T and 5T.

14. A method for recording data on and/or reproducing data from a high density optical disc having a defective area (16), the method comprising:
recording data in a predetermined recording area including the defective area (16); and
recording data indicating an end of recording before the defective area (16).

15. The method as claimed in claim 14, further comprising processing a linkage to occur subsequent to the defective area (16).

16. The method as claimed in claim 14 or 15, wherein the defective area (16) is found during verification of the disc before the data is recorded or during recording and/or reproduction of the data.

17. The method as claimed in any of claims 14 to 16, wherein the data is recorded in units of physical clusters (15).

18. The method as claimed in any of claims 14 to 17, wherein a recording power of a light source is lowered to a power that does not incur recording with respect to the defective area (16).

19. The method as claimed in claim 18, wherein the recording power of the light source is maintained as a reproduction power with respect to the defective area (16).

20. The method as claimed in any of claims 14 to 19, wherein a run-in (13) and a run-out (18) are provided before and after a physical cluster (15) to accurately record data in the physical cluster (15).

21. The method as claimed in any of claims 14 to 20, wherein a guard 3 (14) to record data indicating an end of recording is provided at an end portion of a basic recording unit (15) where a predetermined amount of data is recorded.

22. The method as claimed in claim 21, wherein the data indicating the end of recording recorded before the defective area (16) has the same length and pattern as the guard 3 (14).

23. The method as claimed in claim 22, wherein a guard 1 (13a) and a guard 2 (18b) to protect user data are additionally provided at a run-in (13) and run-out (18).

24. The method as claimed in claim 23, wherein the guard 2 (18b) and the guard 3 (14) have the same length and pattern.

25. The method as claimed in any of claims 21 to 24, wherein the guard 3 (14) has a length of at least 300 channel bits and is formed of a continuous pattern including at least 3T and 5T.

26. The method as claimed in any of claims 14 to 25, wherein the recording area comprises a recorded area in which data is already recorded and a blank area in which data is not recorded.

27. A method for recording data on and/reproducing data from a high density optical disc having a defective area (16), the method comprising:
recording data in a predetermined recording area including the defective area (16); and
processing a linkage to occur subsequent to the defective area (16).

28. The method as claimed in claim 27, wherein the defective area (16) is found during verification of the disc before data is recorded or during recording and/or reproduction of the data.

29. The method as claimed in claim 27 or 28, wherein the data is recorded in units of physical clusters (15).

30. The method as claimed in any of claims 27 to 29, wherein the recording area comprises a recorded area in which data is already recorded and a blank area in which data is not recorded.

31. The method as claimed in any of claims 27 to 30, wherein the recording area comprises a recorded area in which data is already recorded and a blank area in which data is not recorded.

32. The method as claimed in any of claims 27 to 31, wherein a run-out having a guard 2 (18b) to protect data is provided subsequent to the physical cluster (15), and the guard 2 (18b) has the same length and pattern as a guard 3 (14) in which data indicating an end of recording is recorded.

33. The method as claimed in claim 32, wherein the guard 3 (14) has a length of at least 300 channel bits and is formed of a continuous pattern including at least 3T and 5T.
